# EUROPEAN PATENT APPLICATION

(11) **EP 1 973 044 A1**
(43) Date of publication of application: **24.09.2008**
(21) Application number: 06828398.5
(22) Date of filing: 19.12.2006
(51) Int. Cl.: G06F 17/30

(54) **METHOD FOR ACCESSING THE DATA IN XML FILE**

(30) Priority: 19.12.2005 CN 200510132306
(71) Applicant: Wuxi Evermore Software, Inc, Wuxi City, Jiangsu Province 214028 (CN)
(72) Inventor: GUO, Wei, Jiangsu 214028 (CN)
(74) Representative: Price, Nigel John King
(86) International application number: PCT/CN2006/003490
(87) International publication number: WO 2007/071181

(57) **Abstract**

A method for accessing data in an XML file includes: judging whether the index file of the XML to be accessed exists, and constructing the index file if the index file does not exist; reading the index file of the XML into the memory; searching identification information according to pre-defined rules, and obtaining location parameters of the identification information; extracting corresponding data objects or elements according to the location parameter from the XML file according to the identification information. The present invention may locate the data objects or elements efficiently and quickly by constructing the index file, thus accelerate speed of accessing data in a large-scale XML file, and make user's operation sense better.

## Description

### FIELD OF THE TECHNOLOGY

The present invention relates to a method for accessing data in an XML file, in particular to a method for accessing data in an XML file efficiently and quickly by constructing an index file of the XML file.

### BACKGROUND OF THE INVENTION

Traditional data files of an electronic computer are mainly stored and read in binary. The data files in binary must be read, written and revised by specific programs, so there are great difficulties in data representation, expansibility, user's management and Web application. With development of computer technology, application of Web is more and more extensive. Because of the weakness of the binary data files in mutuality and reveal in Web layer, the binary data files are replaced by a new technology gradually, XML (extensible Markup Language). XML is a metadata markup language that offers a form of describing structural data, which can be performed extensively and disposed easily. The form is easy to be understood and managed, and data structure is separated from data representation, so the form is very flexible in application and easy to be expanded, and could integrate data of numerous sources seamlessly. Nowadays, the XML technology has already been applied to a lot of fields such as advanced database searching, online bank, medicine, legislation and e-business, and is playing a bigger role.

The XML file is made up of a series of marks and content data in the marks, for example, following is an XML file:

```
     <document>
       <section>
            <paragraph>
                Moon's down, crows cry and frost fills all the sky,
           </paragraph>
           <paragraph>
                By maples and boat lights, I sleepless lie,
           </paragraph>
       </section>
       <section>
            <paragraph>
                Outside Suzhou, Hanshan temple is in sight,
            </paragraph>
            <paragraph>
                It's ringing bells reach my boat at midnight.
            </paragraph>
       </section>
     </document>
```

The document, section, paragraph are all marks that user defines, and the ancient poetry is the content data in the marks. Meaning of the file is easy to be understood literally, and the user can reveal or handle the file easily according to the marks. When the XML file is being handled, order of the marks needs to be analyzed, and then the file may be accessed. The prior analytic technologies of the form of XML file are mainly two kinds: SAX (simple API for XML) and DOM (document object model). The SAX is an analytic process based on incident, and adopts a manner of order to read the XML file. An incident of Start element is triggered as the marks of the XML are discovered, then the content data in the marks is read. Advantages of the handling are similar to flow media. The handling can analyze data without needing to analyze the whole XML file, and a small amount of data needs to be stored and handled in the memory during the process of analyzing the data. The analyzing can cease at any time. However, the SAX adopts the manner of order and only stores a small amount of data in the memory, so operation is troublesome if the data in the XML file is needed to be accessed quickly. Such as the example described above, the third paragraph nodes are accessed only after the first two paragraph nodes are analyzed and read. The DOM is an analytic manner based on object, and the data is loaded in the memory in manner of arborescent structure when the DOM is used. The analytic manner's characteristic is that data is lasting in memory, so the structure and content data can be revised. But the manner must bring enormous expenses of the memory, especially for some large-scale files, constructing a DOM tree may spend longer time. Such as the example described above, characters of the first, second and fourth paragraph nodes are analyzed and loaded if the characters of the third paragraph nodes are accessed.

The two analytic manners are both based on reading and writing the file orderly, and for the application of storing the data in XML but needing to access the data randomly, especially in the situation of the file data with very large data capacity, the needed data is difficult to be obtained efficiently.

### SUMMARY OF THE INVENTION

A purpose of the present invention is to provide a method for accessing data in an XML file, in particular to a method for accessing data in designated position of the XML file efficiently and quickly by constructing an index file of the XML file.

For the above purpose, the present invention provides a method for accessing data in an XML file, includes:

Step 1: reading an index file of an XML file into the memory;

Step 2: searching identification information in the index file according to pre-defined rules, and obtaining location parameters of the identification information; and

Step 3: extracting corresponding data objects or elements from the XML file according to the identification information.

According to the technical scheme described above, the present invention may locate the data objects or elements efficiently and quickly by constructing the index file so as to accelerate the analytic speed of a large-scale XML file and make user's operation sense better.

Following further describes the technical scheme of the present invention by attached diagrams and embodiments in detail.

### BRIEF DESCRIPTION OF THE DRAWINGS

Figure 1 is a flow diagram of the flow of a basic technical scheme of a method for accessing data in an XML file of the present invention.

Figure 2 is a flow diagram of an embodiment of a method for accessing data in an XML file of the present invention.

### DETAILED DESCRIPTION OF THE PREFERRED EMBODIMENTS

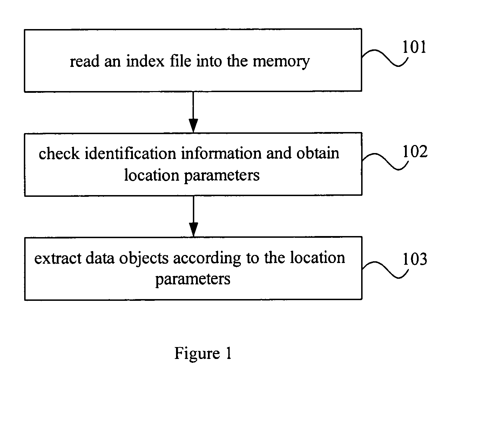

Figure 1 is a flow diagram of the flow of a basic technical scheme of a method for accessing data in an XML file according to the present invention, as shown in Figure 1 which includes:

Step 101: Reading an index file of an XML file into the memory;

Step 102: Searching identification information in the index file according to pre-defined rules, and obtaining location parameters of the identification information; and

Step 103: Extracting corresponding data objects or elements from the XML file according to the identification information.

In the step 102, the pre-defined rules may be a rule of string matching. Because the XML file is described by a plain text, and the string matching is usually applied in a form of the plain text, so the rule of string matching is adopted. However the adopted pre-defined rules may change according to a forming manner of the index file, and do not limit to the manner of string matching.

For accurate localization for the data objects, the identification information in the step 102 is represented by routes of nodes where the data objects are located, and for different nodes having the same route representation, serial numbers of each level of the routes can be added in the representation. The routes or the serial numbers correspond to the data objects or data elements. Location information of the data objects is also included in the index file, and the location information corresponds to attribute values of the identification. The location information generally adopts an offset value calculated from the address of the first node, in other words, adopts deviation address of the data objects relative to the first address of the file.

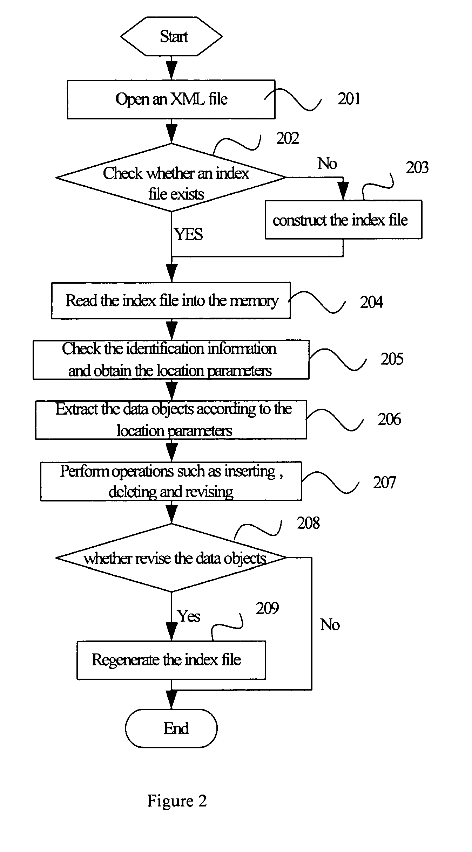

Figure 2 is a flow diagram of an embodiment of a method for accessing data in an XML file of the present invention. Take an XML file as an example, and content of the XML file is:

```
   <document>
   <section>
       <paragraph>
            Moon's down, crows cry and frost fills all the sky,
       </paragraph>
       <paragraph>
            By maples and boat lights, I sleepless lie,
        </paragraph>
   </section>
   <section>
        <paragraph>
            Outside Suzhou, Hanshan temple is in sight,
        </paragraph>
        <paragraph>
            It's ringing bells reach my boat at midnight.
        </paragraph>
    </section>
   </document>
```

Content of the index file generated corresponding to the XML file is:
document/section.1 10
document/section.1 /paragraph.1 20
document/section.1/paragraph.2 58
document/section.2 107
document/section.2/paragraph.1 117
document/section.2/paragraph.2 155

The following steps are performed:

Step 201: Opening the XML file, and loading the XML file into the memory;

Step 202: checking whether the XML file constructs the index file, and performing step 204 if the XML file constructs the index file, otherwise, constructing the index file and performing step 203.

Step 203: Constructing an index file of the XML file which may include only a main index list or include index subtabulations in various forms.

Step 204: Reading the constructed index file into the memory;

Step 205: Searching route information of the data objects as the identification information in the index file according to pre-defined rules, and obtaining addresses of the corresponding data objects; the pre-defined rules may be rules of string searching.

Step 206: Locating to the XML file according to the searched address and extracting corresponding data objects or elements.

Step 207: Performing operation of analyzing and transferring on the extracted data objects or elements, and the operation includes reading, inserting, deleting or revising the data.

Step 208: Judging whether the data objects are revised and the index file needs to be updated, if the data objects are revised and the index file needs to be updated , updating the index file, otherwise ending;

Step 209: Regenerating the index file.

In the step 203 of the above embodiment, the constructed index file includes a single-level main index table, and the table includes route information of each of the data objects, and the corresponding offset values that the data objects or elements deviate from a first address, that is address. In addition to the above way of constructing the index table according to the physical order of the attribute value of the identification, other construction manners may be adopted according to practical demands, such as multi-level table of static index structure or B + tree of dynamic index structure. For example, a manner of multi-level index may be adopted based on the demand of searching speed of the constructed index table or the demand of organization relation of the data object structure. The attribute values of the identifications may be definite length or indefinite length. Take the above example as an example to construct an index file structure as follows:

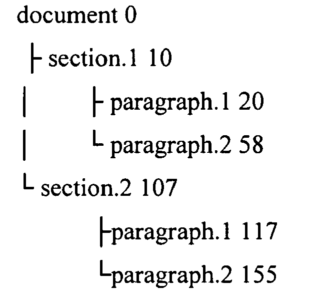

When the position of the data object whose route is document/section.2/paragraph.1 is searched in the index file, at first, the term of section.2 is found in the first level index according to the information representing section in the routes, then start position of paragraph. 1 117 is found from the second level index of the term.

In order to better operate the data objects or data elements, index subtabulations may be constructed in various forms in the index file of the step 203 of the present embodiment, and the structure of the main index table and the index subtabulations may be arranged in a certain form. For example, content of the index file including an index subtabulation is as follows:
//Node Indexes Table
document/section.1 10
document/section.1 /paragraph.1 20
document/section. 1/paragraph.2 58
document/section.2 107
document/section.2/paragraph.1 117
document/section.2/paragraph.2 155
//Style Indexes Table
Normal documnt/section.1/paragraph.2, document/section.2/paragraph.2
Heading 1 document/section.1 /paragraph.1, document/section.2/paragraph.1

For the index file carrying the index subtabulation, speed may be accelerated in some particular operations. For example, a paragraph of Normal style is changed to a paragraph of Heading1 style. Firstly, the corresponding attribute value of the identification is searched according to the pre-set rules by a style subtabulation, then data in the XML file is extracted according to the corresponding location information, and revising is performed. Parts related to the style subtabulations are revised after the revising.

As shown in the above examples, the route information of the data objects is listed in a form of a complete string. In practical applications, in order to avoid the index file itself too large, various ways may be used to simplify the representation form of the route. For example, the section, paragraph that represent names of the nodes may be omitted, and the names of the nodes are only represented by the serial numbers that the nodes located in father nodes.

Though illustration and description of the present disclosure have been given with reference to exemplary embodiments thereof, it should be appreciated by persons of ordinary skill in the art that various changes in forms and detail can be made without deviation from the spirit and scope of this disclosure, which are defined by the appended claims.

## Claims

1. A method for accessing data in an eXtensible Markup Language (XML) file, comprising:
step 1: reading an index file of an XML file into a memory;
step 2: searching identification information in the index file according to pre-defined rules, and obtaining location parameters of the identification information; and
step 3: extracting corresponding data objects or elements from the XML file according to the identification information.

2. The method according to claim 1, wherein before the step 1 the method further comprises:
judging whether the XML file constructs the index file, and performing the step 1 if the XML file constructs the index file, otherwise, constructing the index file and performing the step 1.

3. The method according to claim 1, wherein the index file in the step 1 comprises: the identification information of each of the data objects or elements and the corresponding location parameters recording the identification information.

4. The method according to claim 1, wherein the step 2 specifically comprises: searching a string matching with the identification information in the index file by way of string matching, and obtaining a location parameter corresponding to the string.

5. The method according to claim 1, wherein the identification information in the step 2 is route information of nodes where the data objects or elements are located.

6. The method according to claim 1, wherein the location parameters in the step 2 are offset values that the data objects or elements corresponding to the identification information deviate from a first address.

7. The method according to claim 3, wherein the index file further comprises index structure information constructed according to the identification information and the location parameters.

8. The method according to claim 7, wherein the index structure information is static index structure information or dynamic index structure information.

9. The method according to claim 8, wherein the static index structure information is a multilevel index table.

10. The method according to claim 8, wherein the dynamic index structure information is a B+ tree.

11. The method according to claim 1, wherein after the step 3 the method further comprises:
judging whether the data objects are revised and the index file needs to be updated, if the data objects are revised and the index file needs to be updated, updating the index file, otherwise, ending.
